# EUROPÄISCHE PATENTSCHRIFT

(11) **EP 0 523 217 B1**
(45) Veröffentlichungstag und Bekanntmachung des Hinweises auf die Patenterteilung: **07.09.1994**
(21) Anmeldenummer: 92903618.4
(22) Anmeldetag: 04.02.1992
(51) Int. Cl.: B60T 8/36, B60T 13/68

(54) **DRUCKSTEUERVENTIL**
PRESSURE-CONTROL VALVE
SOUPAPE DE REGULATION DE LA PRESSION

(30) Priorität: 05.02.1991 DE 4103365
(43) Veröffentlichungstag der Anmeldung: 20.01.1993
(73) Patentinhaber: ALFRED TEVES METALLWARENFABRIK GMBH & CO. OHG, 51702 Bergneustadt (DE)
(72) Erfinder: GOOSSENS, André, F., L., B-2840 Rumst (BE)
(74) Vertreter: Portwich, Peter
(86) Internationale Anmeldenummer: EP9200241
(87) Internationale Veröffentlichungsnummer: WO9213741

(56) Entgegenhaltungen:
- WO-A-90/03500
- DE-A- 3 240 276
- FR-A- 0 957 864
- FR-A- 1 481 372
- GB-A- 2 021 240

## Beschreibung

Die Erfindung betrifft ein Drucksteuerventil, insbesondere Elektromagnetventil für Bremsanlagen mit Schlupfregelung, nach dem Oberbegriff des Anspruchs 1.

Derartige konventionelle, bereits hinreichend bekannte Drucksteuerventile finden vielfältige technische Verwendungsmöglichkeiten.

In der DE-A-32 40 276 ist bereits ein druckausgeglichenes Drucksteuerventil der vorgenannten Gattung beschrieben, das in einer Ausführungsform zur Abdichtung eines ersten Druckraums gegenüber einem zweiten Druckraum einen in einem Führungsabschnitt eingesetzten Dichtring aufweist, um die zwischen dem Ventilschaft und dem Führungsabschnitt bestehende Spielpassung gegenüber Spaltleckageströme zu verschließen.

Bei näherer Betrachtung der Ventilkonstruktion ist zu bedenken, daß eine befriedigende Dichtwirkung nur bei Wahl einer engtolerierten Passung zwischen dem Ventilschaft und dem das Dichtelement aufnehmenden Führungsabschnitt des Gehäuses gewährleistet ist. Die Herstellung einer möglichst engtolerierten Spielpassung stößt jedoch mit zunehmender Miniaturisierung nicht nur aus Kostengründen, sondern auch aus fertigungs- und funktionstechnischen Gesichtspunkten an die Grenze der produktionsgerechten Realisierungsmöglichkeiten. Zudem beeinträchtigt eine allzu enge Spielpassung die für die einwandfreie Ventilschließfunktion erforderliche Selbstzentrierung des Ventilschaftes gegenüber dem Ventilsitz.

Ferner gilt es zu bedenken, daß die aus dem Stand der Technik bekannte Verwendung von Elastomerdichtungen zum Zwecke der Abdichtung zwischen dem Führungssteg des Gehäuses und dem Ventilschaft zwangsläufig hohe den Verschleiß fördernde Reibungskräfte erzeugen, die über entsprechend erhöhte Feder- und Magnetkräfte kompensiert werden müssen. Zu beachten bleibt ferner, daß eine Miniaturisierung der Elastomerdichtungen nur sehr eingeschränkt möglich ist. In einer weiteren Ausführungsform gemäß DE-A-32 40 276 wird anstelle einer Ringdichtung eine am Ventilschaft und am Ventilgehäuse befestigte Membranabdichtung verwendet. Auch diese alternative Abdichtungsmaßnahme am Ventilschaft kann in der Praxis nicht befriedigen, da insbesondere mit abnehmender Ventilbaugröße der zur Selbstzentrierung des Ventilschließgliedes erforderliche Radialversatz auf die Membran nur vermindert übertragen werden kann.

Daher ist es die Aufgabe der Erfindung, ein druckausgeglichenes, kostengünstiges Drucksteuerventil der vorgenannten Gattung zu schaffen, das bei Miniaturisierung eine reibungsminimierte und zugleich leckagefreie Abdichtung des Ventilschaftes gegenüber der Ventilführung im Gehäuse gewährleistet, ohne die Selbstzentrierfähigkeit des Ventilschaftes gegenüber dem Ventilsitz einzuschränken.

Erfindungsgemäß wird diese Aufgabe durch die den Patentanspruch 1 kennzeichnenden Merkmale gelöst, wonach ein am Ventilgehäuse anliegendes Dichtelement um das Maß einer zwischen dem Ventilschaft und dem Ventilgehäuse bestehende Spielpassung radial verlagerbar ist.

Eine konkretisierte, vorteilhafte Ausführungsform des erfindungsgemäßen Dichtelementes gemäß den Merkmalen des Anspruchs 2 sieht vor, die von dem Ventilschaft und dem Führungsabschnitt abgewandte Fläche des Dichtelementes im wesentlichen mit einer konvex gewölbten Ringfläche zu versehen, die von einem Dichtungsniederhalter beaufschlagt ist. Damit ist die Voraussetzung geschaffen, eine weitgehende gleichmäßige Verteilung der Dichtkräfte über den Umfang des Dichtelementes auf die Dichtflächen einwirken zu lassen, ohne die radiale Verlagerungsmöglichkeit des Dichtelementes am planen Führungsabschnitt einzuschränken.

In einer bevorzugten Ausgestaltung der Erfindung gemäß den Merkmalen des Anspruchs 3 ist vorgesehen, den Dichtungsniederhalter mit einem Innenkonus zu versehen, der zugleich in der Funktion eines Federtellers eine Druckfeder aufnimmt. Durch die Kegelfläche des Dichtungsniederhaltes wird ein virtueller Außendruck auf das Dichtelement erzeugt, der das Dichtelement tendenziell auf den Ventilschaft zu drücken versucht.

Zweckmäßigerweise ist der Dichtungsniederhalter mit der Druckfeder und dem Dichtelement konzentrisch zum Ventilschaft ausgerichtet, um bei Bedarf eine allseitig ungehinderte freie selbstzentrierende Ausrichtung des am Ventilschaft angebrachten Ventilschließgliedes gegenüber dem Ventilsitz zu gewährleisten.

Vorzugsweise kann gemäß Anspruch 5 die konvexe Außenkontur des Dichtelementes präzise des im wesentlichen dreieckförmigen Profilquerschnittes eines in der Gesamtheit als Kugelabschnitt zu betrachtenden Dichtringform entsprechen, so daß eine allseitig gleiche Flächenpressung der druckbeaufschlagten Flächen begünstigt wird.

Um den bei Verwendung eines einzelnen Dichtelementes im Spielraum zwischen Ventilschaft und Führungsabschnitt entstehenden hydraulischen Überdruck und damit eine Rückschlagventilwirkung auszuschließen, ist gemäß den Merkmalen des Anspruchs 6 vorgesehen, diametral zum ersten Dichtelement auf der entgegengesetzten Stirnseite des Führungsabschnittes ein spiegelsymmetrisch angeordnetes weiteres Dichtelement zu positionieren. Damit ist unabhängig von der Richtung der hydraulischen Druckbeaufschlagung, d.h. unabhängig von den jeweils in den Druckräumen herrschenden Drücken eine drucklose Abdichtung des zwischen dem Ventilschaft und dem Führungsabschnitt bestehenden Spielraumes gewährleistet.

Der Führungsabschnitt ist in einer speziellen Ausführungsform als Scheibe mit gegenüber dem Ventilgehäuse größerer Gefügehärte ausgebildet. Damit sind einerseits die erwünschten ebenen Stirnflächen zur Realisierung der radialen Verschiebbarkeit des Dichtelementes gegeben, andererseits kann durch die entsprechend hohe Gefügehärte unter Anwendung der sogenannten "self clinching" Befestigung eine erstaunlich sichere und dichte Verankerung des Führungsabschnittes im Ventilgehäuse hergestellt werden.

Nachfolgend wird die Erfindung an Hand eines Ausführungsbeispieles näher beschrieben.

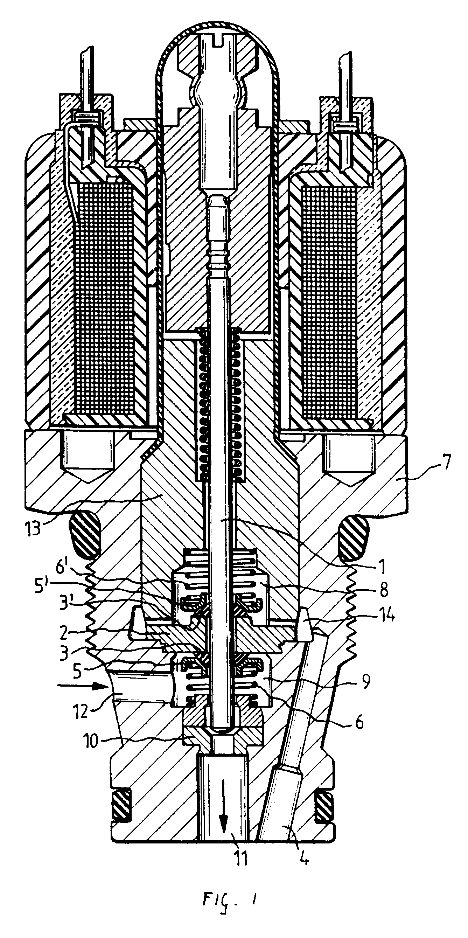

Die Figur 1 zeigt
ein in der elektromagnetisch stromlosen Grundstellung auf permanenten Druckmitteldurchlaß geschalteten, ein Ventilschließglied aufnehmenden Ventilschaft 1, der die Druckmittelverbindung zwischen einer Druckmittelquelle, zum Beispiel von einem Bremsdruckgeber, über einen zweiten Druckmittelkanal 12 zum verbraucherseitigen, beispielsweise radbremsseitig angeschlossenen ersten Druckmittelkanal 11 steuert. Ein den ersten mit dem zweiten Druckmittelkanal 11,12 verbindender zweiter Druckraum 9 nimmt das den Ventilschaft 1 gegenüber dem ersten Druckraum 8 abdichtende Dichtelement 3 auf, das mittels einer im zweiten Druckraum 9 angeordneten Druckfeder 6 an einer Stirnfläche des Führungsteils 2 gehalten ist. Das zwischen der abgesetzen Öffnung innerhalb des Ventilgehäuses 7 und dem Magnetkern 13 mittels "self-clinching"-Anordnung gehaltene Führungsteil 2 weist eine vorzugsweise scheibenförmige Gestalt auf, dessen koaxial angeordnete Bohrung spielbehaftet vom Ventilschaft 1 durchdrungen ist. In dem zum Führungsteil 2 zugewandten Abschnitt des Magnetkerns 13 befindet sich eine Stufenbohrung zur Aufnahme einer zweiten Feder 6', die analog zur ersten Feder 6 auf der entgegengesetzten Stirnfläche des Führungsteils 2 ein Dichtelement 3' positioniert. Damit ist gewährleistet, daß trotz einer relativ großzügig dimensionierten Spielpassung zwischen dem Ventilschaft 1 und der Bohrung des Führungsteils 2 eine ausreichende Dichtwirkung zwischen dem ersten und dem zweiten Druckraum 8,9 zustande kommt. Dabei erstreckt sich der dem Magnetkern 13 zugewandte erste Druckraum 8 entlang dem Ventilschaft 1 bis in den Hohlraum des Ventildoms. Über entsprechende querverlaufende Ausnehmungen 14 an der das Führungsteil 2 berührenden Stirnfläche des Magnetkerns 13, sowie über eine den ersten Druckraum 8 mit einem Bypasskanal 4 verbindende ringförmige Ausnehmung 14 innerhalb des Ventilgehäuses 7 ist ein permanenter Druckausgleich zwischen dem verbraucherseitigen ersten Druckmittelkanal 11 und dem ersten Druckraum 8 gegeben. Die Dichtelemente 3, 3' bestehen vorzugsweise aus Polytetrafluoräthylen oder einem vergleichbaren Werkstoff. Die Dichtelemente 3, 3' können sich zur Selbstzentrierung des Ventilschaftes 1 gegenüber dem Ventilsitz 10 in radialer Richtung verschieblich auf der Stirnfläche des Führungsteils 2 bewegen. Diese freie Beweglichkeit wird u.a. durch die Querkraft freie Richtungselastizität der Druckfedern 6, 6' begünstigt. Unter Einwirkung des hydraulischen Drucks sind die Dichtelemente 3, 3' selbstabdichtend ausgelegt, so daß mit bereits relativ kleinen Federkräften, zum Beispiel 50 Gramm bei 1,6 Millimeter Durchmesser des Ventilschaftes, eine einwandfreie hydraulische Dichtheit sowie minimale Reibkräfte von nur etwa 100 Gramm bei einem hydraulischen Druck von 100 bar entstehen. Durch die außerordentlich kleinen Reibkräfte ergeben sich ausgesprochen gute radiale Gleitbewegungsverhältnisse der Dichtelemente 3, 3' zur Realisierung der gewünschten Selbstzentrierung. Ergänzend wird darauf verwiesen, daß bei Verwendung von lediglich einem Dichtelement dieses in Abhängigkeit von Betrag und Richtung des hydraulischen Differenzdrucks die Funktion eines Rückschlagventils übernehmen kann, was bei der vorbeschriebenen Konstruktion eines druckausgeglichenen Elektromagnetventils jedoch nicht erwünscht ist.

Das Verfahren zur Montage des die Dichtelemente 3, 3' aufnehmenden Führungsabschnittes 2, stellt eine besonders präzise Maßnahme dar, die bei gleichzeitig exakter Ausrichtung des Führungsabschnittes 2 gegenüber dem Ventilsitz 10 die Einhaltung eines relativ geringen konstruktiven Spiels zwischen dem Ventilschaft 1 und der Bohrung im Führungsabschnitt 2 gewährleistet. Zwangsläufig ist hierdurch auch gleichzeitig die Voraussetzung einer möglichst exakten Ausrichtung der mit dem Führungsabschnitt korrespondierenden Dichtelemente gegeben.

Abschließend wird auf die Funktionsweise des in der Zeichnung 1 dargestellten Elektromagnetventils verwiesen.

Die Abbildung zeigt das Elektromagnetventil in der nicht aktivierten Stellung, so daß der im zweiten Druckmittelkanal 12 anstehende Druck der Druckmittelquelle ungehindert über den zweiten Druckraum 9 in den ersten Druckmittelkanal 11 gelangen kann. Infolge der tangentialen Einmündung des als Druckausgleichsbohrung wirksamen Bypasskanals 4 in den ersten Druckmittelkanal 11 kann der zunächst von der Hilfsdruckquelle eingesteuerte Druck auch in die ringförmige Ausnehmung 14 und in den ersten Druckraum 8 gelangen. Dieser Druck steht zwangsläufig auch im Hohlraum des Ventildoms an. Bei elektromagnetischer Erregung des Ventils schließt der Ventilschaft 1 den Druckmitteldurchlaß zum ersten Druckmittelkanal 11, womit der augenblicklich in Richtung des Verbrauchers einen geregelte Druck über den Bypasskanal 4 in den ersten Druckraum 8 zurückwirken kann. Eine Fortpflanzung des relativ hohen, von der Druckmittelquelle in den zweiten Druckraum 9 anstehenden Drucks in Richtung des ersten Druckraums 8 wird infolge durch das Ventilschließglied und durch die Dichtelemente 3, 3' wirksame Sperrstellung herbeigeführt. Durch die Einwirkung des in dem Druckraum 8, 9 anstehenden Hochdrucks, werden die freien Körperflächen der Dichtelemente 3, 3' auf die Kontaktflächen des Ventilschaftes 1 und den Führungsabschnittes 2 gepresst, so daß über die konvexe Form der Dichtungsoberfläche hydraulisch selbstverstärkend ein leckagefreier Verschluß des zum Zwecke der Selbstzentrierung vorgesehenen Spielraums zwischen Ventilschaft 1 und Führungsabschnitt 2 erfolgt, ohne die radiale Verschiebbarkeit der Dichtelemente 3, 3' zu beeinträchtigen.

### Bezugszeichenliste

- 1: Ventilschaft
- 2: Führungsabschnitt
- 3, 3': Dichtelement
- 4: Bypasskanal
- 5, 5': Dichtungsniederhalter
- 6, 6': Druckfeder
- 7: Ventilgehäuse
- 8, 9: Druckraum
- 10: Ventilsitz
- 11: erster Druckmittelkanal
- 12: zweiter Druckmittelkanal
- 13: Magnetkern
- 14: Ausnehmung

## Patentansprüche

1. Drucksteuerventil, insbesondere Elektromagnetventil für hydraulische Bremsanlagen mit Schlupfregelung, das ein in einem Ventilgehäuse (7) geführtes Ventilschließglied aufweist, dessen Ventilschaft (1) abgedichtet angeordnet in einem gehäuseseitigen, einen ersten (8) von einem zweiten (9) Druckraum trennenden Führungsabschnitt (2), einen den ersten Druckraum mit dem zweiten Druckraum verbindenden Druckausgleichskanal aufweist, oder wobei anstelle des Ventilschaftes (1) das Ventilgehäuse die Druckausgleichsbohrung (4) aufweist, wobei das Ventilschließglied in Abhängigkeit von seiner Hubbewegung mit einem in einem Ventilgehäuse (7) befestigten Ventilsitz (10) korrespondiert, dadurch **gekennzeichnet**, daß der Ventilschaft (1) zumindest ein am Führungsabschnitt (2) anliegendes Dichtelement (3, 3') führt, das relativ gegenüber dem Führungsabschnitt (2) um das Maß einer zwischen dem Ventilschaft (1) und dem Führungsabschnitt (2) bestehende Spielpassung radial verlagerbar ist, um den ersten vom zweiten Druckraum (8, 9) hydraulisch zu trennen.

2. Drucksteuerventil nach Anspruch 1, dadurch **gekennzeichnet**, daß die von dem Ventilschaft (1) und dem Führungsabschnitt (2) abgewandte Fläche des Dichtelementes (3, 3') eine im wesentlichen konvex gewölbte Ringfläche aufweist, die von einem Dichtungsniederhalter (5, 5') beaufschlagt ist.

3. Drucksteuerventil nach Anspruch 1 oder 2, dadurch **gekennzeichnet**, daß der Dichtungsniederhalter (5, 5') aus einer im wesentlichen innen konischen Profilform gebildet ist, die von einer Druckfeder (6, 6') unter Flächenpressung am Führungsabschnitt (2) gehalten ist.

4. Drucksteuerventil nach mindestens einem der vorhergehenden Ansprüche, dadurch **gekennzeichnet**, daß der Dichtungsniederhalter (5, 5') mit der Druckfeder (6, 6') und dem Dichtelement (3, 3') konzentrisch am Ventilschaft (1) angeordnet ist.

5. Drucksteuerventil nach mindestens einem der vorhergehenden Ansprüche, dadurch **gekennzeichnet**, daß der Profilquerschnitt des Dichtelementes (3, 3') im wesentlichen eine Dreiecksstruktur aufweist, die mit ihren Katheten an der Stirnfläche des Ventilschaftes (1) und des Führungsabschnittes (2) anliegen, wobei die Hypotenuse von dem Dichtungsniederhalter (5, 5') unter Einwirkung einer nahezu allseitig gleichen Flächenpressung beaufschlagt ist.

6. Drucksteuerventil nach mindestens einem der vorhergehenden Ansprüche 1 bis 5, dadurch **gekennzeichnet**, daß diametral zum ersten Dichtelement (3) ein zweites Dichtelement (3') am Führungsabschnitt (2) angeordnet ist, das mittels einer auf einen weiteren Dichtungsniederhalter (5') einwirkenden Druckfeder (6') anlegbar gehalten ist.

7. Drucksteuerventil nach einem der vorhergehenden Ansprüche, dadurch **gekennzeichnet**, daß der Führungsabschnitt (2) als separates, rotationssymmetrisch ebenes Bauteil mit gegenüber dem Ventilgehäuse (7) vergleichsweise größerer Gefügehärte kraftschlüssig im Ventilgehäuse (7) gehalten ist, wobei die am Umfang des Führungsabschnittes (2) angeordnete Hinterschneidung mit dem Material des Ventilgehäuses (7) in Eingriff steht.

8. Drucksteuerventil nach Anspruch 6, dadurch **gekennzeichnet**, daß die den Dichtungsniederhaltern (5, 5') abgewandten Enden der Druckfedern (6, 6') an den Innenwandungen der beiden Druckräume (8, 9) abstützbar sind.

9. Verfahren zur Montage des das Dichtelement tragenden Führungsabschnittes (2) innerhalb eines Drucksteuerventils, insbesondere Elektromagnetventil für hydraulische Bremsanlagen mit Schlupfregelung, das ein in einem Ventilgehäuse (7) geführtes Ventilschließglied aufweist, dessen Ventilschaft (1) abgedichtet in einem gehäuseseitigen, einen ersten (8) von einem zweiten (9) Druckraum trennenden Führungsabschnitt (2), einen den ersten Druckraum mit dem zweiten Druckraum verbindenden Druckausgleichskanal aufweist, oder wobei anstelle des Ventilschaftes (1) das Ventilgehäuse eine Druckausgleichskanal aufweist, wobei das Ventilschließglied in Abhängigkeit von seiner Hubbewegung mit einem im Ventilgehäuse (7) vorgesehenen Ventilsitz (10) korrespondiert, insbesondere nach einem der vorhergehenden Ansprüche 1 bis 8, dadurch **gekennzeichnet**, daß:
a) ein Lehrdorn zum Ventilsitz (10) zentriert in das Ventilgehäuse (7) eingesetzt wird, wobei ein zur Gehäusebohrung konzentrischer Ansatz oder vorzugsweise die Gehäusebohrung selbst die präzise Zentrierung für den Führungsabschnitt (2) bildet,
b) der Führungsabschnitt (2) mit einem Zentrierwerkzeug in die Ventilgehäusebohrung derart eingedrückt wird, daß der gegenüber dem Führungsabschnitt (2) relativ weichere Werkstoff des Ventilgehäuses (7) plastisch verformt den Hohlraum einer am Umfang des Führungsabschnittes (2) vorgesehene Hinterschneidung ausfüllt, um die erforderliche Haltekraft zu erzeugen.

## Claims

1. Pressure control valve, in particular solenoid-operated valve for hydraulic brake systems with slip control, including a valve closure member which is guided in a valve housing (7) and the valve shaft (1) of which is sealedly arranged in a guiding portion (2) on the housing side, which guiding portion separates a first (8) from a second (9) pressure chamber, and including a pressure compensating channel connecting the first pressure chamber with the second pressure chamber, or wherein the valve housing, instead of the valve shaft (1), includes the pressure compensating bore (4), the valve closure member corresponding, in dependence on its lift movement, with a valve seat (10) fitted in a valve housing (7),
**characterized** in that the valve shaft (1) guides at least one sealing element (3, 3') which abuts against the guiding portion (2) and which is radially displaceable relative to the guiding portion (2) by the dimension of a clearance fit prevailing between the valve shaft (1) and the guiding portion (2) in order to hydraulically separate the first from the second pressure chamber (8, 9).

2. Pressure control valve as claimed in claim 1,
**characterized** in that the area of the sealing element (3, 3'), which area is directed away from the valve shaft (1) and the guiding portion (2), is substantially shaped as a convex annular surface which is acted upon by a holding-down device for seals (5, 5').

3. Pressure control valve as claimed in claim 1 or claim 2,
**characterized** in that the holding-down device for seals (5, 5') has a profiled form with a substantially inner cone which is held by means of a compression spring (6, 6') under surface pressure against the guiding portion (2).

4. Pressure control valve as claimed in at least any one of the preceding claims,
**characterized** in that the holding-down device for seals (5, 5') with the compression spring (6, 6') and the sealing element (3, 3') is coaxially arranged at the valve shaft (1).

5. Pressure control valve as claimed in at least any one of the preceding claims,
**characterized** in that the profile cross-section of the sealing element (3, 3') has a substantially triangular structure whose legs abut against the end face of the valve shaft (1) and the guiding portion (2), while the hypotenuse is acted upon by the holding-down device for seals (5, 5') with an almost identical surface pressure on all sides.

6. Pressure control valve as claimed in at least any one of the preceding claims 1 to 5,
**characterized** in that a second sealing element (3') is arranged at the guiding portion (2) diametrically to the first sealing element (3), the said second sealing element being held so as to be abuttable by means of a compression spring (6') acting upon another holding-down device for seals (5').

7. Pressure control valve as claimed in any one of the preceding claims,
**characterized** in that the guiding portion (2), being a separate rotationally symmetric plane component part and having a greater structural hardness than the valve housing (7), is held in the valve housing (7) in operative engagement therewith, the undercut arranged on the circumference of the guiding portion (2) engaging with the material of the valve housing (7).

8. Pressure control valve as claimed in claim 6,
**characterized** in that the ends of the compression springs (6, 6'), which ends are directed away from the holding-down devices for seals (5, 5'), are adapted to bear against the internal walls of the two pressure chambers (8, 9).

9. Method of assembling the guiding portion (2) carrying the sealing element within a pressure control valve, in particular a solenoid-operated valve for hydraulic brake systems with slip control, including a valve closure member which is guided in a valve housing (7) and the valve shaft (1) of which is sealedly arranged in a guiding portion (2) on the housing side, which guiding portion separates a first (8) from a second (9) pressure chamber, and includes a pressure compensating channel connecting the first pressure chamber with the second pressure chamber, or wherein the valve housing, instead of the valve shaft (1), includes a pressure compensating channel, the valve closure member corresponding, in dependence on its lift movement, with a valve seat (10) provided in the valve housing (7), in particular as claimed in any one of the preceding claims 1 to 8,
**characterized** in that:
a) a plug gauge is inserted into the valve housing (7) so as to be centred relative to the valve seat (10), a projection being concentric to the housing bore or, preferably, the housing bore itself forming the exact centring for the guiding portion (2);
b) the guiding portion (2) is pressed into the valve housing bore by means of a centring tool such that the material of the valve housing (7), which is relatively soft compared with the guiding portion (2), is plastically deformed and fills the hollow space of an undercut provided on the circumference of the guiding portion (2) in order to produce the required retaining force.

## Revendications

1. Valve de commande de pression notamment électrovanne pour système de freinage hydraulique à régulation du glissement comprenant un obturateur de valve qui est guidé dans un corps de valve (7) et dont une tige de valve (1), qui est disposée d'une manière étanche dans une section de guidage (2) située du côté du corps et séparant une première chambre de pression (8) d'une seconde chambre de pression (9), comporte un conduit d'équilibrage de pression qui fait communiquer la première chambre de pression avec la seconde chambre de pression, ou dans laquelle, à la place de la tige de valve (1), le corps de valve comporte le conduit d'équilibrage de pression (4), l'obturateur de valve s'adaptant, en fonction de son déplacement dans un sens et dans l'autre, à un siège de valve (10) fixé dans le corps de valve (7), caractérisée en ce que la tige de valve (1) guide au moins un élément d'étanchéité (3, 3') qui est en appui sur la section de guidage (2) et qui est agencé de façon à pouvoir être déplacé radialement, d'une manière relative vis-à-vis de la section de guidage (2), de la valeur du jeu existant entre la tige de valve (1) et la section de guidage (2), afin d'isoler hydrauliquement la première chambre de pression (8) de la seconde chambre de pression (9).

2. Valve de commande de pression suivant la revendication 1, caractérisée en ce que la surface de l'élément d'étanchéité (3, 3') qui est située à l'opposé de la tige de valve (1) et de la section de guidage (2) comprend une surface annulaire à courbure essentiellement convexe qui est soumise à l'action d'un organe (5, 5') de maintien de l'élément d'étanchéité.

3. Valve de commande de pression suivant l'une des revendications 1 et 2, caractérisée en ce que l'organe (5, 5') de maintien de l'élément d'étanchéité est constitué par un élément profilé qui a une forme intérieure pratiquement conique et qui est maintenu en appui sur la section de guidage (2), avec un effet de pression superficiel, par un ressort de compression (6, 6').

4. Valve de commande de pression suivant l'une des revendications précédentes, caractérisée en ce que l'organe (5, 5') de maintien de l'élément d'étanchéité est disposé, avec le ressort de compression( 6, 6') et l'élément d'étanchéité (3, 3'), suivant le même axe que la tige de valve (1).

5. Valve de commande de pression suivant l'une des revendications précédentes, caractérisée en ce que la section transversale de la forme profilée de l'élément d'étanchéité (3, 3') a pratiquement une structure triangulaire qui, par ses côtés de l'angle droit, s'appuie sur les surfaces frontales de la tige de valve (1) et de la section de guidage (2), tandis que l'hypoténuse est soumise à l'action de l'organe (5, 5') de maintien de l'élément d'étanchéité avec un effet de pression superficielle pratiquement identique de tous les côtés.

6. Valve de commande de pression suivant l'une des revendications 1 à 5, caractérisée en ce que, d'une manière diamétralement opposée au premier élément d'étanchéité (3), il est disposé, sur la section d'étanchéité (2), un second élément d'étanchéité (3') qui est maintenu en pouvant être appliqué au moyen d'un ressort de compression (6') exerçant son action sur un autre organe (5') de maintien de cet élément d'étanchéité.

7. Valve de commande de pression suivant l'une des revendications précédentes, caractérisée en ce que la section de guidage (2), constituant une pièce distincte, de forme plane et à symétrie de révolution, possédant une dureté structurelle relativement plus grande que celle du corps de valve (7), est maintenue dans le corps de valve (7) sous l'action d'une force, la partie en contre-dépouille ménagée sur le contour de la section de guidage (2) venant en prise sur la matière du corps de valve (7).

8. Valve de commande de pression suivant la revendication 5, caractérisée en ce que les extrémités des ressorts de compression (6, 6') qui sont situées à l'opposé des organes (5, 5') de maintien des éléments d'étanchéité sont agencées de façon à pouvoir prendre appui sur les parois intérieures des deux chambres de pression (8, 9).

9. Procédé de montage de la section de guidage (2), qui porte l'élément d'étanchéité, à l'intérieur d'une valve de commande de pression, notamment électrovanne pour système de freinage hydraulique à régulation du glissement, comprenant un obturateur de valve qui est guidé dans un corps de valve (7) et dont une tige de valve (1), qui est disposée d'une manière étanche dans une section de guidage (2) située du côté du corps et séparant une première chambre de pression (8) d'une seconde chambre de pression (9), comporte un conduit d'équilibrage de pression qui fait communiquer la première chambre de pression avec la seconde chambre de pression, ou dans laquelle, à la place de la tige de valve (1), le corps de valve comporte un conduit d'équilibrage de pression, l'obturateur de valve s adaptant, en fonction de son déplacement dans un sens et dans l'autre, à un siège de valve (10) prévu dans le corps de valve (7), notamment suivant l'une des revendications 1 à 8, caractérisé en ce que :
a) on place un tampon-calibre dans le corps de valve (7) d'une manière centrée vis-à-vis du siège de valve (10), alors qu'une partie en saillie, de même axe que l'alésage du corps, ou de préférence l'alésage du corps lui-même réalise le centrage précis de la section de guidage (2),
b) au moyen d'un outil de centrage, on introduit la section de guidage (2) dans l'alésage du corps de valve d'une façon telle que la matière du corps de valve (7), qui est relativement plus souple que celle de la section de guidage (2), remplit, en se déformant plastiquement, la cavité d'une partie en contre-dépouille ménagée sur le contour de la section de guidage (2), afin de produire la force nécessaire de maintien.
